# EUROPEAN PATENT APPLICATION

(11) **EP 2 905 734 A1**
(43) Date of publication of application: **12.08.2015**
(21) Application number: 13845322.0
(22) Date of filing: 25.09.2013
(51) Int. Cl.: G06Q 20/00

(54) **ELECTRONIC SIGNING TOOL, SYSTEM AND METHOD**

(30) Priority: 08.10.2012 CN 201210376477
(71) Applicant: Tendyron Corporation, Beijing 100083 (CN)
(72) Inventor: LI, Dongsheng, Beijing 100083 (CN)
(74) Representative: Pizzoli, Antonio
(86) International application number: PCT/CN2013/084211
(87) International publication number: WO 2014/056399

(57) **Abstract**

Provided is an electronic signing tool, comprising: a security chip, a read/write component, a communication module and an input/output component, wherein the security chip is connected to the read/write component, the communication module and the input/output component respectively. Also provided is an electronic signing system. The system comprises: a server, a card and an aforementioned electronic signing tool. An electronic signing tool and system provided in the present invention can perform a secure read/write operation on an IC card, a magnetic strip card, etc. remotely, and avoid information being leaked or information being tampered with when performing an operation on the IC card, the magnetic strip card, etc. at the time a remote operation is performed through a public network, thus improving the security and convenience.

## Description

### FIELD

The present disclosure relates to an electronic technical field, and more particularly to an electronic signature token, an electronic signature system and an electronic signature method.

### BACKGROUND

When performing operations, an existing card reader generally operates in following manners. The existing card reader reads data of a card, such as a smart card or a magnetic stripe card, according to an instruction from a server to acquire card data of the card, uploads the card data to the server, and the server performs a processing according to the card data. For example, when recharging a public transportation card or an electricity card, a cardholder needs to reach a specific recharging center to complete the recharging operation, the convenience and flexibility of which are required to be improved.

In order to improve the convenience and the flexibility, a portable card reader is applied to perform remote interactions with a server via a public network. Using the public network to transmit information, however, tends to cause information leakage or information modification, thus causing a loss to the user. Therefore, the security needs to be improved.

### SUMMARY

The present disclosure seeks to solve at least one of the above-mentioned problems.

A main object of the present disclosure is to provide an electronic signature token.

Another object of the present disclosure is to provide an electronic signature system.

Yet another object of the present disclosure is to provide an electronic signature method.

In order to achieve the above objects, technical solutions of the present disclosure are implemented in the following.

A first aspect of the present disclosure provides an electronic signature token, comprising a security chip, a read-write component, a communication module and an input-output component, in which: the security chip is connected to the read-write component, the communication module and the input-output component respectively; the security chip is configured to receive a reading instruction through the communication module, to acquire card data of a card read by the read-write component according to the reading instruction, to sign the card data to obtain first signature data, and to send the first signature data through the communication module; the security chip is configured to receive a trade instruction through the communication module, to analyze the trade instruction to obtain trade information, and to display the trade information through the input-output component; the security chip is configured to receive confirmation information output by the input-output component, to perform an authentication on the confirmation information, to sign the trade information to obtain second signature data if the authentication is successful, and to send the second signature data through the communication module; and the security chip is configured to receive a writing instruction through the communication module, to analyze the writing instruction to obtain data to be written, and to write the data to be written to the card through the read-write component.

Further, the read-write component is a contact component or a non-contact component.

Further, the contact component is a card slot; and the non-contact component is an NFC read-write module or an RF read-write module.

Further, the security chip is further configured to receive a query instruction through the communication module, to acquire the card data read by the read-write component according to the query instruction, and to display the card data through the input-output component.

Further, the input-output component comprises: a display screen configured to output and display the reading instruction, the query instruction or the trade information output by the security chip, and a keyboard configured to output the confirmation information to the security chip.

Further, the input-output component is a touch screen configured to display the reading instruction, the query instruction or the trade information output by the security chip, and to output the confirmation information to the security chip.

Further, the communication module is a wired communication module or a wireless communication module.

Another aspect of the present disclosure further provides an electronic signature system, comprising a server, a card, and the aforementioned electronic signature token, in which: the server is configured to send the reading instruction to the electronic signature token, to receive the first signature data, and to send the trade instruction to the electronic signature token after validating that card data carried by the first signature data is legal data; the server is configured to receive the second signature data sent by the electronic signature token, to perform a trade operation according to trade information carried by the second signature data, and to send the writing instruction to the electronic signature token if the trade operation is successful; and the electronic signature token is configured to perform operations of data reading from and data writing to the card.

Further, the system further comprises a terminal connecting to the server and to the electronic signature token; and the terminal is configured to transmit instructions and data interacted between the server and the electronic signature token.

Further, the terminal is further configured to display the reading instruction or the query instruction sent by the server.

Further, the terminal is a fixed terminal or a mobile terminal.

A further aspect of the present disclosure provides an electronic signature method, comprising: sending by a server a reading instruction to an electronic signature token; receiving the reading instruction, acquiring card data of a card according to the reading instruction, signing the card data to obtain first signature data, and sending the first signature data to the server by the electronic signature token; receiving the first signature data and sending a trade instruction to the electronic signature token after validating that the card data carried by the first signature data is legal data by the server; receiving confirmation information related to a trade information, performing an authentication on the confirmation information, signing the trade information to obtain second signature data if the authentication is successful, and sending the second signature data to the server by the electronic signature token; receiving the second signature data sent by the electronic signature token, performing a trade operation according to the trade information carried by the second signature data, and sending a writing instruction to the electronic signature token if the trade operation is successful by the server; and analyzing the writing instruction to obtain data to be written and writing the data to be written to the card by the electronic signature token.

Further, the method further comprises: sending by the server a query instruction to the electronic signature token, and receiving the query instruction, acquiring the card data of the card according to the query instruction, and displaying the card data of the card by the electronic signature token.

Further, the method further comprises: transmitting instructions and data interacted between the server and the electronic signature token by a terminal connected between the electronic signature token and the server.

As can be seen from the technical solutions according to the present disclosure, with the electronic signature token, the electronic signature system and the electronic signature method according to the present disclosure, remote operations of reading from or writing to an IC card or a magnetic stripe card may be performed securely. Meanwhile, in performing remote operations on an IC card or a magnetic stripe card via a public network, information leakage or information modification may be avoided, and thus both security and convenience are improved.

### BRIEF DESCRIPTION OF THE DRAWINGS

In order to illustrate technical solutions of embodiments of the present disclosure more clearly, a brief introduction of drawings in the description of the embodiments are shown below. Apparently, those described in the drawings are only some embodiments of the present disclosure. For those skilled in the art, other drawings can be obtained according to these drawings, without making creative efforts.
Fig. 1 is a schematic diagram of an electronic signature token according to Embodiment 1 of the present disclosure;
Fig. 2 is a schematic diagram of an input-output component according to Embodiment 1 of the present disclosure;
Fig. 3 is a schematic diagram of an electronic signature token according to Embodiment 2 of the present disclosure;
Fig. 4 is a schematic diagram of an electronic signature system according to Embodiment 3 of the present disclosure; and
Fig. 5 is a flow chart of an electronic signature method according to Embodiment 4 of the present disclosure.

### DETAILED DESCRIPTION

Technical solutions of embodiments of the present disclosure will be described below clearly and completely with reference to drawings in the embodiments of the present disclosure. Apparently, these described embodiments are solely a part of other than all embodiments of the present disclosure. Embodiments based on the present disclosure and other embodiments obtainable by those skilled in the art without making creative efforts all belong to the protection scope of the present disclosure.

In the specification of the present disclosure, unless specified or limited otherwise, relative terms such as "central", "longitudinal", "lateral", "front", "rear", "right", "left", "inner", "outer", "lower", "upper", "horizontal", "vertical", "above", "below", "up", "down", "top", "bottom" as well as derivative thereof (e.g., "horizontally", "downwardly", "upwardly", etc.) should be construed to refer to the orientation as then described or as shown in the drawings under discussion. These relative terms are for convenience of description and do not require that the present disclosure be constructed or operated in a particular orientation. In addition, terms such as "first" and "second" are used herein for purposes of description and are not intended to indicate or imply relative importance or significance or number.

In the present disclosure, unless specified or limited otherwise, the terms "mounted," "connected," "coupled," "fixed" and the like are used broadly, and may be, for example, fixed connections, detachable connections, or integral connections; may also be mechanical or electrical connections; may also be direct connections or indirect connections via intervening structures; may also be inner communications of two elements, which can be understood by those skilled in the art according to specific situations.

In the following, embodiments of the present disclosure will be described in detail with reference to the drawings.

### Embodiment 1

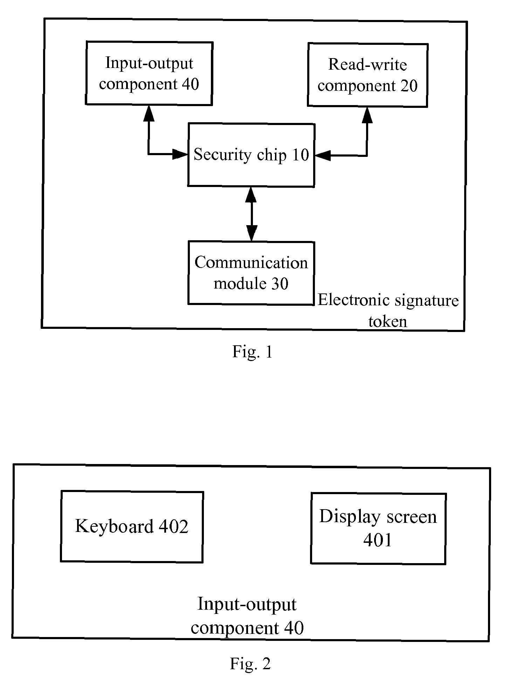

The present Embodiment 1 provides an electronic signature token. As shown in Fig. 1, the electronic signature token comprises a security chip 10, a read-write component 20, a communication module 30 and an input-output component 40. The security chip 10 is connected to the read-write component 20, the communication module 30 and the input-output component 40 respectively.

A certificate of an electronic signature token is a digital certificate identifying the identity of the electronic signature token. Every electronic signature token generates a unique certificate during initialization, and stores the certificate in the security chip 10. The electronic signature token performs downloading, updating and deleting operations to a secret key, a certificate or a parameter through the communication module 30.

The certificate of the electronic signature token may generate a public key or a private key using a RSA algorithm, and the key may be 1024 bits or 2048 bits long. The signature algorithm may be at least one of SHA-1 algorithm, SHA256 algorithm, SM2 algorithm, and SM3 algorithm.

When a user pays online using an IC card or a magnetic stripe card via an online payment platform of a PC or a mobile phone or consumes by initiating an IC card or a magnetic stripe card via a client, the users sends a reading instruction to the security chip 10, the security chip 10 receives the reading instruction through the communication module 30, the input-output component 40 displays the reading instruction (for example, please swipe card or please put card on card reading terminal), the read-write component 20 acquires card data by reading chip data of the IC card or magnetic track information of the magnetic stripe card and stores the card data, the security chip 10 acquires card data output by the read-write component 20 according to the reading instruction, signs the card data with a signature algorithm to obtain first signature data, and sends the first signature data through the communication module 30.

Specifically, the read-write component 20 may be a contact component or a non-contact component. In other words, the read-write component 20 may be a card slot, an NFC read-write module or an RF read-write module.
1) The card slot may be an IC card reader-writer or a magnetic stripe reader. The IC card reader-writer may perform command communications or data communications, and include parts like a mechanic part, an electrical part, a logical protocol part, etc., as required in relative parts of Financial Integrated Circuit (IC) Card Standard of China. The IC card reader-writer may perform operations of reading from and writing to an IC card directly to complete remote operations of reading from and writing to the IC card, and thus convenience and security for use are both improved.
   The magnetic stripe reader may read magnetic track information whose magnetic standard is normal, and read data of the second magnetic track and data of the third magnetic track of the magnetic stripe card simultaneously. The magnetic stripe reader may read any magnetic stripe card which satisfies at least one standard of GB/T 14916, GB/T 15120, GB/T 15694-1, ISO 7812-2 and GB/T17552. The card swiping direction may be monodirectional or bidirectional, and the card swiping speed may be 10 mm/s to 100 mm/s. The operation of writing to the magnetic stripe card can be completed only through the server, not the magnetic stripe reader.
2) The NFC read-write module may read from the IC card and perform command communication or data communication with an IC card via NFC. Operations of reading from and writing to the IC card are performed by the read-write component of the electronic signature token, such that remote operations of reading from and writing to the IC card may be completed, and thus the convenience and security for use are improved. Concerning a specific NFC communication protocol, reference is made to records in the related art, details of which are omitted herein.
3) RF read-write module may read from an IC card, and perform command communication or data communication with the IC card via an RF signal. Operations of reading from and writing to the IC card are performed by the read-write component of the electronic signature token, such that remote operations of reading from and writing to the IC card may be completed, and thus the convenience and security for use are improved. Concerning a specific RF communication protocol, reference is made to records in the related art, details of which are omitted herein.

Specifically, the communication module 30 may be a wired communication module or a wireless communication module. The communication module may be at least one of an audio interface module, a USB interface module, a MINI USB interface module, a MICRO USB interface module, a Bluetooth communication module, an NFC communication module and an RF communication module.

The security chip 10 receives a trade instruction through the communication module 30 and analyzes the trade instruction to obtain trade information, and the input-output component 40 displays the trade information.

Specifically, the input-output component 40 may include a display screen 401 and a keyboard 402, as shown in Fig. 2.
1) The display screen 401 displays prompt message related to the reading instruction, for example, please swipe card or please put card on card reading terminal, such that the cardholder learns card reading operations to be performed by the card reader. The display screen 401 outputs and displays trade information output by the security chip 10, such as a trade amount, such that the cardholder may read the trade information and confirm whether the trade is correct. The display screen 401 displays trade success information after the trade operation is successful. The cardholder may select whether to store a "payment success voucher", and a trade record query may be performed in the future if the payment voucher is stored. The display screen may display ASCII visual characters. The character may be GB/T 2312 Chinese character meeting national standards of China.
2) The keyboard 402 outputs the confirmation information (for example, a preset password or an acquired dynamic password) to the security chip 10. The password inputting may be completed in the following two manners. The first manner is performing an encryption transmission through an operation secret key of the keyboard 402, and the second manner is performing an encryption transmission by encrypting a public key using a password with asymmetrical encryption technology, thus ensuring the security of the password inputting. In order to further improve the security of the password, the keyboard 402 may display asterisk instead of plaintext when the cardholder is inputting the password using the keyboard 402. The keyboard 402 includes at least ten number keys and several function keys, and the function keys include at least a confirmation key, a correction key, and a canceling key.

In addition, the input-output component 40 may be a touch screen which integrates both an inputting function of the keyboard and a displaying function of the display screen to complete operation of the display screen 401 and the keyboard 402.

The security chip 10 receives the confirmation information (for example, a preset password or an acquired dynamic password) output by the input-output component 40, and performs authentication on the confirmation information with a preset algorithm in the security chip 10. If the authentication is unsuccessful, the display screen displays a prompt of inputting confirmation information again. If the authentication is successful, the security chip 10 signs the trade information to obtain second signature data, and sends the second signature data through the communication module 30.

The security chip 10 receives a writing instruction through the communication module 30, analyzes the writing instruction according to an analyzing algorithm preset in the security chip 10 to obtain data to be written, and writes the data to be written to the card through the read-write component 20.

The present Embodiment 1 provides an electronic signature token. With this electronic signature token, remote operations of reading from or writing to an IC card or a magnetic stripe card may be performed securely. Meanwhile, when performing remote operations on the above cards via a public network, the security chip 10 included in the electronic signature token of the present Embodiment 1 signs the card data read by the read-write component and sends the signed card data. In this way, in performing operations to an IC card or a magnetic stripe card, information leakage or information modification may be avoided, and thus both security and convenience may be improved. In addition, as operations of reading from and writing to the card are performed by the read-write component 20 of the electronic signature token of the Embodiment 1, the operation complexity of the present electronic token are reduced, compared with a conventional electronic signature token which uses a card to perform relative operations.

### Embodiment 2

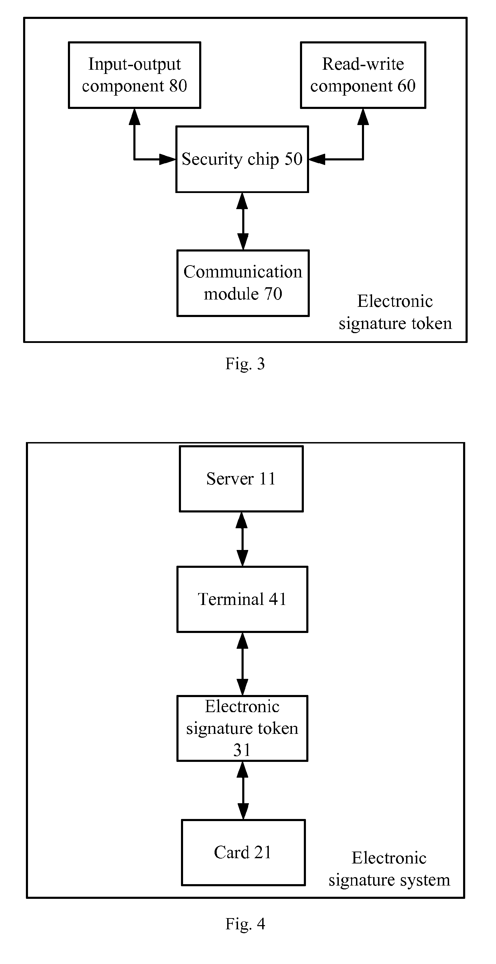

Embodiment 2 provides an embodiment of querying card data via an electronic signature token. As shown in Fig. 3, the electronic signature token comprises a security chip 50, a read-write component 60, a communication module 70 and an input-output component 80. The security chip 50 is connected to the read-write component 60, the communication module 70 and the input-output component 80 respectively.

When a cardholder sends a command of querying the balance of an IC card or a magnetic stripe card via a client interface of a PC (when the electronic signature token is inserted into the PC via a USB interface) or a client interface of a mobile phone (when the electronic signature token is inserted into the mobile phone via an audio interface), the security chip 50 receives a query instruction through the communication module 70, the input-output component 80 displays the query instruction (for example, please swipe card or please put card on card reading terminal), the read-write component 60 acquires the card data by reading chip data of the IC card and magnetic track information of the magnetic stripe card and stores the card data, the security chip 50 acquires the card data output by the read-write component 60 according to the query instruction, and the input-output component 80 displays the card data. The result of balance query is displayed on the display screen of the electronic signature token.

With the electronic signature token according to the present Embodiment 2, remote operations of reading from an IC card or a magnetic stripe card may be performed securely, which helps the cardholder to learn information such as balance of a card.

### Embodiment 3

Another aspect of the present disclosure further provides an electronic signature system. As shown in Fig. 4, the electronic signature system comprises a server 11, a card 21, an electronic signature token 31, and a terminal 41 connecting to the sever 11 and to the electronic signature token 31.

When a user pays online using an IC card or a magnetic stripe card via an online payment platform of a PC or a mobile phone or consumes by initiating an IC card or a magnetic stripe card through a client, the sever 11 sends a reading instruction to the electronic signature token 31, the electronic signature token acquires card data according to the reading instruction and signs the card data to obtain first signature data, the server receives the first signature data sent from the electronic signature token 31 and sends a trade instruction to the electronic signature token 31 after validating that the card data carried by the first signature data is legal data.

Specifically, validating whether the card data is legal data includes: comparing a value of the card data carried by the first signature data with values of card data prestored in the sever 11, and validating that the card data carried by the first signature data is legal data if the value of the card data carried by the first signature data is included in values of card data prestored in the server 11; or comparing a format of the card data carried by the first signature data with formats of card data prestored in the sever 11, and validating that the card data carried by the first signature data is legal data if the format of the card data carried by the first signature data is a predetermined format.

If the electronic signature token 31 receives the trade instruction sent from the server, the electronic signature token 31 outputs a prompt message to remind the cardholder to input confirmation information (for example, a preset password or an acquired dynamic password), performs an authentication on the confirmation information, and signs the trade information if the authentication is successful to obtain second signature data. The server 11 receives the second signature data sent by the electronic signature token 31, performs an trade operation according to the trade information carried by the second signature data, and sends a writing instruction to the electronic signature token 31 if the trade operation if successful.

Specifically, the signature algorithm can include at least one of SHA-1 algorithm, SHA256 algorithm, SM2 algorithm and SM3 algorithm.

The electronic signature token 31 may perform operations of reading data from or writing data to the card 21.

Specifically, the card 21 may be a magnetic stripe card, a PBOC finance IC card or an industry application IC card. The industry application IC card may include at least one of a water card, an electricity card, a gas card and a traffic card. For a magnetic stripe card, the electronic signature token 31 may perform an operation of reading data from other than writing data to the magnetic stripe card.

In addition, the user may send a command of querying a balance of an IC card or a magnetic stripe card via a client interface of a PC (when the electronic signature token is inserted into the PC via a USB interface) or a client interface of a mobile phone (when the electronic signature token is inserted into the mobile phone via an audio interface), the electronic signature token 31 receives and displays the query instruction (for example, please swipe card or please put card on card reading terminal), reads the card data, and displays a result of the query on the display screen of the electronic signature token.

The terminal 41 transmits instructions and data interacted between the server 11 and the electronic signature token 31, for example, the reading instruction, the query instruction, the trade instruction, the writing instruction, the first signature data and the second signature data.

In addition, the terminal 41 may further display a prompt message corresponding to the reading instruction or the query instruction sent from the server 11, such that the cardholder may learn reading operations to be performed by the card reader.

Specifically, the terminal 41 may be a fixed terminal (such as a PC or an ATM) or a mobile terminal (such as a laptop, a mobile phone, or a PAD).

With the electronic signature system according to the present Embodiment 3, remote reading and writing operations to an IC card or a magnetic stripe card may be performed securely. Meanwhile, in performing remote operations to an IC card or a magnetic stripe card via a public network, information leakage or information modification may be avoided, and thus both the security and convenience are improved.

### Embodiment 4

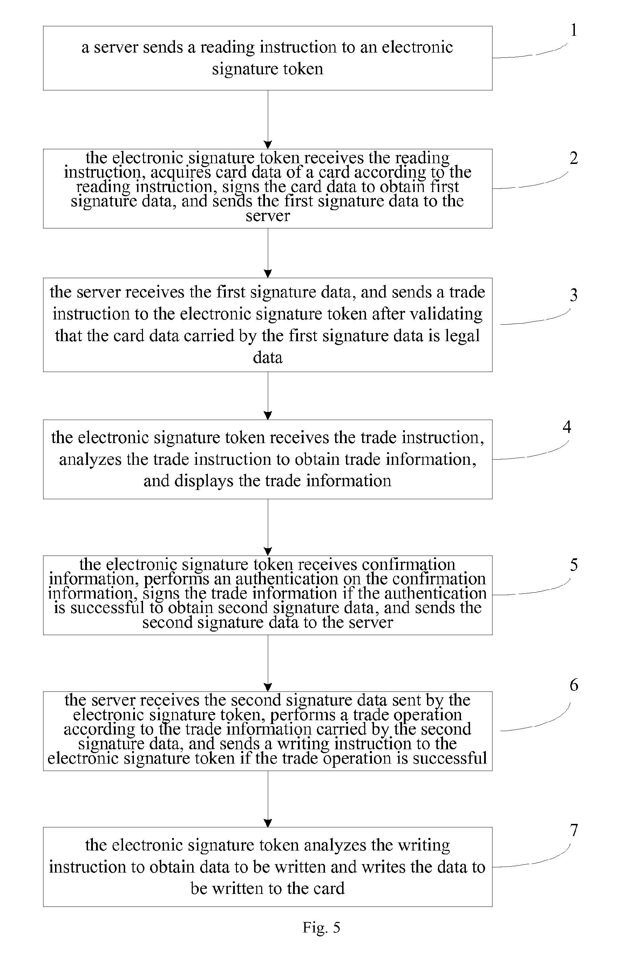

Yet another aspect of the present disclosure provides an electronic signature method. As shown in Fig. 5, the electronic signature method includes following steps.

At step 1, a server sends a reading instruction to an electronic signature token.

When a user pays online using an IC card or a magnetic stripe card via an online payment platform of a PC or a mobile phone or consumes by initiating an IC card or a magnetic stripe card through a client, the server sends a reading instruction to an electronic signature token.

At step 2, the electronic signature token receives the reading instruction, acquires card data of a card according to the reading instruction, signs the card data to obtain first signature data, and sends the first signature data to the server.

The electronic signature token receives the reading instruction, the display screen displays the reading instruction (for example, please swipe card or please put card on card reading terminal), and the electronic signature token acquires the card data of the card by reading chip data of the IC card or magnetic track information of the magnetic stripe card.

At step 3, the server receives the first signature data, and sends a trade instruction to the electronic signature token after validating that the card data carried by the first signature data is legal data.

Specifically, a process of validating whether the card data carried by the first signature data is legal data includes following steps: comparing a value of the card data carried by the first signature data with values of card data prestored in the server 11, and validating that the card data carried by the first signature data is legal data if the value of the card data carried by the first signature data is included in values of card data prestored in the server 11; or comparing a format of the card data carried by the first signature data with formats of card data prestored in the server 11, and validating that the card data carried by the first signature data is legal data if the format of the card data carried by the first signature data is a predetermined format.

At step 4, the electronic signature token receives the trade instruction, analyzes the trade instruction to obtain trade information, and displays the trade information.

At step 5, the electronic signature token receives confirmation information, performs an authentication on the confirmation information, signs the trade information if the authentication is successful to obtain second signature data, and sends the second signature data to the server.

After confirming that the trade information displayed by the electronic signature token is correct, the user inputs the confirmation information, such as a preset password or an acquired dynamic password. The electronic signature token performs an authentication on the confirmation information, and signs the trade information if the authentication is successful to generate second signature data. Specifically, the signature algorithm includes at least one of SHA-1 algorithm, SHA256 algorithm, SM2 algorithm and SM3 algorithm.

At step 6, the server receives the second signature data sent by the electronic signature token, performs a trade operation according to the trade information carried by the second signature data, and sends a writing instruction to the electronic signature token if the trade operation is successful.

At step 7, the electronic signature token analyzes the writing instruction to obtain data to be written and writes the data to be written to the card.

Specifically, a terminal connected between the server and the electronic signature token may be used to transmit instructions and data interacted between the server and the electronic signature token, such as the first signature data, the second signature data, the reading instruction, the trade instruction, and the writing instruction.

In addition, the server may send a query instruction to the electronic signature token; the electronic signature token receives the query instruction, and acquires the card data of the card according to the query instruction and displays the card data of the card.

With the electronic signature method according to the present Embodiment 4, remote operations of reading from or writing to an IC card or a magnetic stripe card may be performed securely. Meanwhile, in performing remote operations to an IC card or a magnetic stripe card via a public network, both information leakage or information modification are avoided, and thus both the security and the convenience are improved.

Any procedure or method described in the flow charts or described in any other way herein may be understood to comprise one or more modules, portions or parts for storing executable codes that realize particular logic functions or procedures. Moreover, advantageous embodiments of the present disclosure comprises other implementations in which the order of execution is different from that which is depicted or discussed, including executing functions in a substantially simultaneous manner or in an opposite order according to the related functions. This should be understood by those skilled in the art to which embodiments of the present disclosure belong.

It should be understood that each part of the present disclosure may be realized by the hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc.

Those skilled in the art shall understand that all or parts of the steps in the above exemplifying method of the present disclosure may be achieved by commanding the related hardware with programs. The programs may be stored in a computer readable storage medium, and the programs comprise one or a combination of the steps in the method embodiments of the present disclosure when run on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer readable storage medium.

The storage medium mentioned above may be read-only memories, magnetic disks, CD, etc.

Reference throughout this specification to "an embodiment," "some embodiments," "one embodiment", "another example," "an example," "a specific example," or "some examples," means that a particular feature, structure, material, or characteristic described in connection with the embodiment or example is included in at least one embodiment or example of the present disclosure. Thus, the appearances of the phrases such as "in some embodiments," "in one embodiment", "in an embodiment", "in another example," "in an example," "in a specific example," or "in some examples," in various places throughout this specification are not necessarily referring to the same embodiment or example of the present disclosure. Furthermore, the particular features, structures, materials, or characteristics may be combined in any suitable manner in one or more embodiments or examples.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure. The scope of the present disclosure is defined by the appended claims and equivalents thereof.

## Claims

1. An electronic signature token comprising a security chip, a read-write component, a communication module and an input-output component, wherein:
the security chip is connected to the read-write component, the communication module and the input-output component respectively;
the security chip is configured to receive a reading instruction through the communication module, to acquire card data of a card read by the read-write component according to the reading instruction, to sign the card data to obtain first signature data, and to send the first signature data through the communication module;
the security chip is configured to receive a trade instruction through the communication module, to analyze the trade instruction to obtain trade information, and to display the trade information through the input-output component;
the security chip is configured to receive confirmation information output by the input-output component, to perform an authentication on the confirmation information, to sign the trade information to obtain second signature data if the authentication is successful, and to send the second signature data through the communication module; and
the security chip is configured to receive a writing instruction through the communication module, to analyze the writing instruction to obtain data to be written, and to write the data to be written to the card through the read-write component.

2. The electronic signature token according to claim 1, wherein the read-write component is a contact component or a non-contact component.

3. The electronic signature token according to claim 2, wherein
the contact component is a card slot; and
the non-contact component is an NFC read-write module or an RF read-write module.

4. The electronic signature token according to claim 1, wherein the security chip is further configured to receive a query instruction through the communication module, to acquire the card data read by the read-write component according to the query instruction, and to display the card data through the input-output component.

5. The electronic signature token according to any of claims 1-4, wherein the input-output component comprises:
a display screen configured to output and display the reading instruction, the query instruction or the trade information output by the security chip, and
a keyboard configured to output the confirmation information to the security chip.

6. The electronic signature token according to any of claims 1-4, wherein the input-output component is a touch screen configured to display the reading instruction, the query instruction or the trade information output by the security chip, and to output the confirmation information to the security chip.

7. The electronic signature token according to any of claims 1-6, wherein the communication module is a wired communication module or a wireless communication module.

8. An electronic signature system comprising a server, a card, and an electronic signature token according to any of claims 1-7, wherein:
the server is configured to send the reading instruction to the electronic signature token, to receive the first signature data returned by the electronic signature token, and to send the trade instruction to the electronic signature token after validating that card data carried by the first signature data is legal data;
the server is configured to receive the second signature data sent by the electronic signature token, to perform a trade operation according to trade information carried by the second signature data, and to send the writing instruction to the electronic signature token if the trade operation is successful; and
the electronic signature token is configured to perform operations of data reading from and data writing to the card.

9. The system according to claim 8, wherein the system further comprises a terminal connecting to the server and to the electronic signature token; and
the terminal is configured to transmit the reading instruction, the query instruction, the trade instruction, the writing instruction, the first signature data and the second signature data interacted between the server and the electronic signature token.

10. The system according to claim 9, wherein the terminal is further configured to display the reading instruction or the query instruction sent by the server.

11. The system according to claim 9 or 10, wherein the terminal is a fixed terminal or a mobile terminal.

12. An electronic signature method, comprising:
sending by a server a reading instruction to an electronic signature token;
receiving the reading instruction, acquiring card data of a card according to the reading instruction, signing the card data to obtain first signature data, and sending the first signature data to the server by the electronic signature token;
receiving the first signature data and sending a trade instruction to the electronic signature token after validating that the card data carried by the first signature data is legal data by the server;
receiving the trade instruction, analyzing the trade instruction to obtain trade information, and displaying the trade information by the electronic signature token;
receiving confirmation information, performing an authentication on the confirmation information, signing the trade information to obtain second signature data if the authentication is successful, and sending the second signature data to the server by the electronic signature token;
receiving the second signature data sent by the electronic signature token, performing a trade operation according to the trade information carried by the second signature data, and sending a writing instruction to the electronic signature token if the trade operation is successful by the server; and
analyzing the writing instruction to obtain data to be written and writing the data to be written to the card by the electronic signature token.

13. The method according to claim 12, further comprising:
sending by the server a query instruction to the electronic signature token, and
receiving the query instruction, acquiring the card data of the card according to the query instruction, and displaying the card data of the card by the electronic signature token.

14. The method according to claim 12 or 13, further comprising transmitting the writing instruction, the query instruction, the trade instruction, the writing instruction, the first signature data and the second signature data interacted between the server and the electronic signature token by a terminal connected between the electronic signature token and the server.
